# EUROPÄISCHE PATENTANMELDUNG

(11) **EP 2 042 061 A2**
(43) Veröffentlichungstag der Anmeldung: **01.04.2009**
(21) Anmeldenummer: 08016663.0
(22) Anmeldetag: 23.09.2008
(51) Int. Cl.: A47J 31/00, A47J 31/40, A47J 36/28

(54) **Autarke Heißzubereitungsvorrichtung für Fertig-Lebensmittel, insbesondere Instant-Heißgetränkezubereiter**

(30) Priorität: 25.09.2007 DE 102007045784
(71) Anmelder: Wein, Reinhold, 91056 Erlangen (DE)
(72) Erfinder: Wein, Reinhold, 91056 Erlangen (DE)
(74) Vertreter: Hübner, Gerd

(57) **Zusammenfassung**

Eine autarke Heißzubereitungsvorrichtung für Fertig-Lebensmittel, insbesondere Instant-Heißgetränkezubereiter, umfasst
- ein Reservoir (4) des zuzubereitenden Lebensmittels,
- einen mit einer Zubereitungsflüssigkeit (12), insbesondere Wasser gefüllten Vorratsbehälter (11),
- einen Zubereitungsraum (2) für das zuzubereitende Lebensmittel, und
- eine Durchlauferhitzereinrichtung (7), die aufweist
= eine auf einer exothermen Reaktion beruhende, bei Bedarf aktivierbare Wärmequelle (8), und
= eine von der Wärmequelle (8) heizbare Wärmetauschereinheit (9), mit deren Hilfe die Zubereitungsflüssigkeit (12) unter Verdampfen aus dem Vorratsbehälter (11) über eine Leitung (10) zu dem Zubereitungsraum (2) unter Beaufschlagung des Lebensmittel-Reservoirs (4) transportierbar ist.

## Beschreibung

Die Erfindung betrifft eine autarke Heißzubereitungsvorrichtung für Fertig-Lebensmittel, insbesondere Instant-Getränkezubereiter.

Zum Hintergrund der Erfindung ist festzuhalten, dass veränderte Verbrauchergewohnheiten in den letzten Jahren zu einem starken Trend zu schnell verfügbaren, verzehrfertigen Lebensmitteln und Fertiggetränken geführt haben. So werden zunehmend Fertiggerichte angeboten, die beispielsweise nur mit Hilfe eines Mikrowellengerätes erwärmt oder durch Aufgießen von heißem Wasser verzehrfertig gemacht werden müssen. Bei letzteren Speisen handelt es sich beispielsweise um Fertigsuppen in folienverschlossenen Portionsbechern.

Im Zusammenhang mit Heißgetränken, wie Kaffee oder Tee, ist in den vergangenen Jahren ebenfalls eine starke Zunahme des Außer-Haus-Verbrauchs festzustellen. Besonders drastisch ist der Absatz so genannter "Ein-Tassen-Portionen" gestiegen, die in erster Linie auf der Basis löslichen Kaffees in unterschiedlichsten Geschmacksrichtungen, wie Espresso oder Café Crema vertrieben werden. Die Vertriebswege sind sehr unterschiedlich, wie beispielsweise Ein-Tassen-Automaten in öffentlichen Gebäuden, so genannte "Coffee-Shops" oder - analog den oben erwähnten Fertig-Suppen - Portionspackungen löslicher Kaffeesorten, die mit heißem Wasser aufzugießen sind.

Alle vorstehend erörterten Darreichungsformen von heiß zu verzehrenden Fertig-Lebensmitteln sind nicht "autark" in dem Sinne, dass nach Erwerb einer für die Endzubereitung vorkonfektionierten Portionspackung eine von einer Heißwasser-Versorgung unabhängige Zubereitung möglich wäre. So benötigen die einzelnen Kaffee-Portionen, die in der Regel in Beuteln abgefüllt sind, eine Tasse und aufzugießendes heißes Wasser.

Grundsätzlich sind aus dem Stand der Technik zwar autarke Wärmevorrichtungen für Fertig-Lebensmittel bekannt, die eine auf einer exothermen Reaktion beruhenden, bei Bedarf aktivierbaren Wärmequelle einsetzen. Als Beispiele sind die WO 94/11682 A1, WO 01/91621 A1 oder WO 2006/009 878 A2 zu nennen. Diese Druckschriften offenbaren jedoch jeweils Erhitzungsvorrichtungen für Lebensmittel, bei denen lediglich ein Wärmeübergang von der Wärmequelle auf das Lebensmittel stattfindet. Eine echte Zubereitung im Sinne beispielsweise des Aufbrühens eines Instant-Heißgetränkes oder der Herstellung einer Fertig-Suppe durch Zugabe heißen Wassers ist beim Stand der Technik nicht vorgesehen.

Ausgehend von der geschilderten Problematik des Standes der Technik liegt der Erfindung die Aufgabe zugrunde, eine autarke Heißzubereitungsvorrichtung für Fertig-Lebensmittel anzugeben, mit deren Hilfe unabhängig von jeglicher externer Versorgung beispielsweise mit Heißwasser ein heißes Lebensmittel oder Heißgetränk zubereitet werden kann.

Diese Aufgabe wird durch die im Kennzeichnungsteil des Anspruches 1 angegebenen Merkmale gelöst, wonach vorgesehen sind:
- ein Reservoir des zuzubereitenden Lebensmittels,
- ein mit einer Zubereitungsflüssigkeit, insbesondere Wasser gefüllten Vorratsbehälter,
- ein Zubereitungsraum für das zuzubereitende Lebensmittel, und
- eine Durchlauferhitzereinrichtung, die aufweist
   = eine auf einer exothermen Reaktion beruhende, bei Bedarf aktivierbare Wärmequelle, und
   = eine von der Wärmequelle heizbare Wärmetauschereinheit, mit deren Hilfe die Zubereitungsflüssigkeit unter Verdampfen aus dem Vorratsbehälter über eine Leitung zu dem Zubereitungsraum unter Beaufschlagung des Lebensmittel-Reservoirs transportierbar ist.

Aufgrund dieser Merkmalskombination kann vorteilhafterweise die Heißzubereitungsvorrichtung als eigenständige Verkaufseinheit beispielsweise eine Kaffeeportion als Reservoir bereithalten, die in einem Zubereitungsraum untergebracht ist. Die Heißzubereitungsvorrichtung kann ferner auf eine externe Zuführung einer Zubreitungsflüssigkeit, wie beispielsweise Wasser, verzichten, da ein entsprechender Behälter mit einem Vorrat davon integriert ist. Deren Erhitzung und Transport zu dem Lebensmittel kann durch die Durchlauferhitzereinrichtung bewerkstelligt werden, die in vorteilhafter Weise somit eine typische Doppelfunktion erfüllt.

Erkennbar ist die Heißzubereitungsvorrichtung besonders geeignet zur Verwendung auf Reisen, bei Ausflügen in die Natur, als "eiserne Ration" für den "schnellen Kaffeedurst" und so weiter. Die Heißzubereitungsvorrichtung ist dabei trotz ihres kompletten Funktionsspektrums aufgrund des einfachen Aufbaus so kostengünstig herzustellen, dass sie als Einmal-Packung für portionsweise Verkaufseinheiten geeignet ist.

In den abhängigen Ansprüchen sind vorteilhafte Weiterbildungen der Heißzubereitungsvorrichtung angegeben, deren Merkmale, Einzelheiten und Vorzüge der nachfolgenden Beschreibung eines Ausführungsbeispieles anhand der beigefügten Zeichnungen entnehmbar sind. Es zeigen:
- Fig. 1: einen schematischen Schnitt einer Heißzubereitungsvorrichtung im Ausgangszustand,
- Fig. 2: einen Schnitt der Heißzubereitungsvorrichtung analog Fig. 1 mit einem zubereiteten Heißgetränk, und
- Fig. 3: einen Detailschnitt durch die Wärmetauschereinheit der Durchlauferhitzereinrichtung.

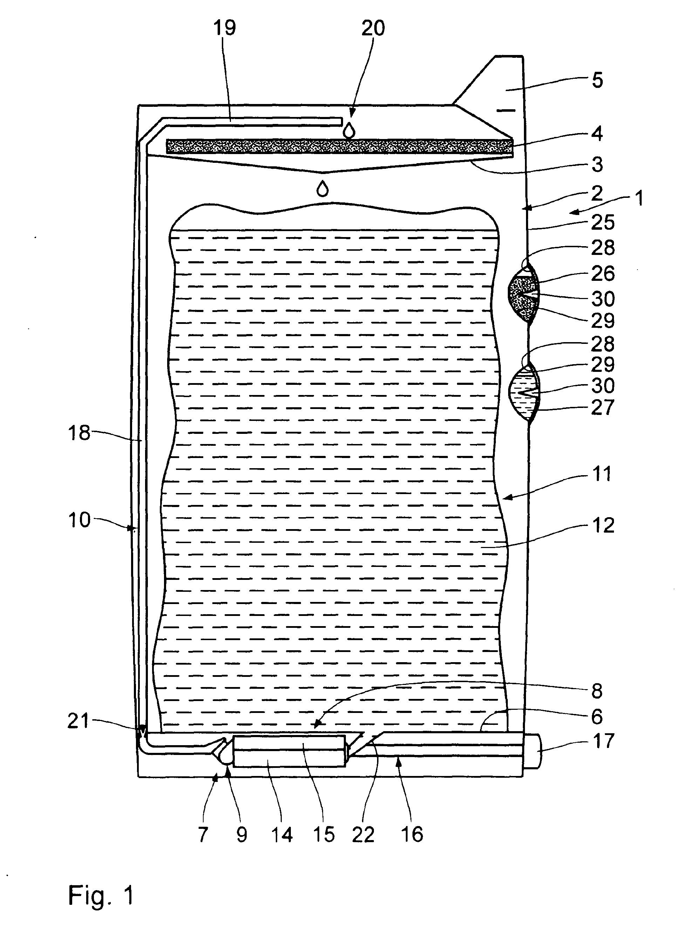

Anhand von Fig. 1 ist der Grundaufbau der Heißzubereitungsvorrichtung zu erläutern. Diese weist einen becherartigen Basisbehälter 1 beispielsweise aus einem hitzebeständigen Kunststoffmaterial auf, der die gesamten inneren Komponenten der Heißzubereitungsvorrichtung beherbergt und als im Ausgangszustand nach außen hermetisch abgeschlossene Verkaufseinheit fungiert. Der Hauptteil des Basisbehälters 1 wird von dem Zubereitungsraum 2 für beispielsweise eine Portion Brühkaffee eingenommen. Oberhalb des Zubereitungsraums 2 ist als Reservoir für das zuzubereitende Lebensmittel im Beispielsfall ein Filterbett 3 mit darauf befindlichem Kaffeepulver 4 vorgesehen. Seitlich vom Filterbett 3 ist an einer Peripherstelle eine Trinktülle 5 ausgebildet, die im Ausgangszustand durch eine nicht näher dargestellte Folienabdeckung zur hermetischen Abdichtung des Zubereitungsraums 2 verschlossen ist.

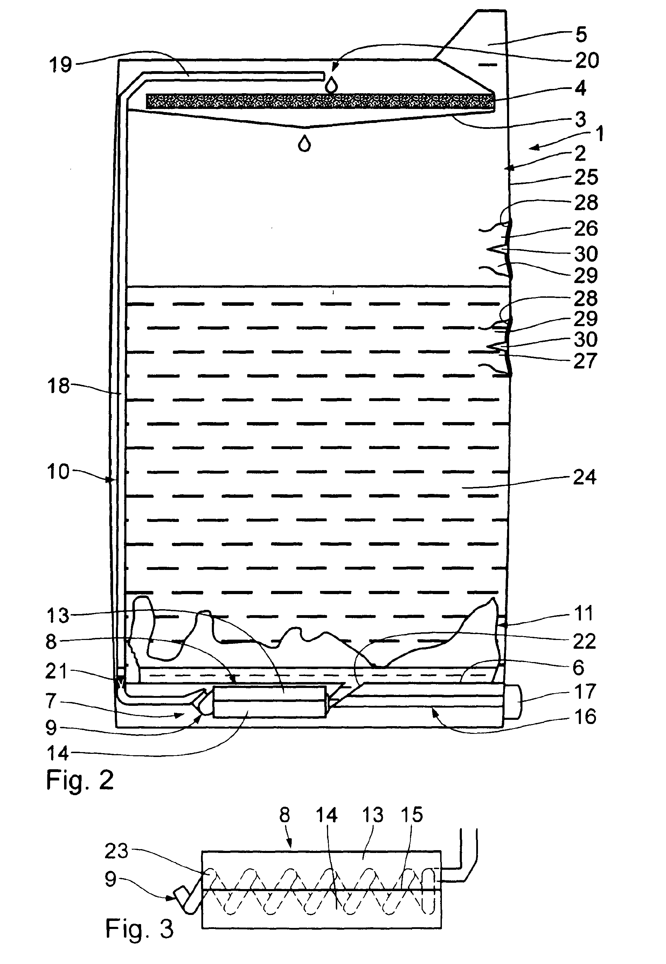

Unterhalb des Bodens 6 des Zubereitungsraums 2 ist die als Ganzes mit 7 bezeichnete Durchlauferhitzereinrichtung mit ihren Hauptkomponenten angeordnet, nämlich einer Wärmequelle 8 und der durch diese hindurch geführten Wärmetauschereinheit 9 in Form eines gewendelten Röhrchens 23 (siehe Fig.3), das in einer Leitung 10 zwischen dem noch näher zu erläuternden Vorratsbehälter 11 für das Brühwasser 12 und dem Filterbett 3 oberhalb des Zubereitungsraums 2 angeordnet ist.

Bei dem Vorratsbehälter 11 handelt es sich um einen aus flexiblem Folienmaterial bestehenden Beutel, der einen großen Teil des Zubereitungsraums 2 im mit Brühwasser 12 gefüllten Zustand einnimmt, dabei aber mit seinen Folienwänden von der Wand des Zubereitungsraumes 2 getrennt ist. Bei einer Entnahme des Brühwassers 12 aus dem Beutel kann dieser kollabieren und den Zubereitungsraum 2 für den zubereiteten Kaffee freigeben.

Die Wärmequelle 8 weist - wie insbesondere aus Fig. 3 deutlich wird - zwei Kammern 13, 14 auf, die jeweils mit einem Reaktanden gefüllt sind. Die beiden Kammern 13, 14 sind durch eine Membran 15 voneinander getrennt, die mittels einer Auslöseeinrichtung in Form eines in einer Führung unter dem Boden 6 des Zubereitungsraumes 2 verschiebbaren Stössels 16 auftrennbar ist. Letzterer ist über einen außen am Basisbehälter 1 zugänglich angebrachten Druckknopf 17 zur Aktivierung der Zubereitungsvorrichtung betätigbar.

Bei den beiden Reaktanden handelt es sich beispielsweise einerseits um Kaliumhydroxid-Pulver und andererseits um eine Eisen(III)chloridlösung. Versuche im Vorfeld der Entwicklung der Erfindung haben ergeben, dass zur Erhitzung von 200 ml Wasser von ca. 20°C auf eine Endtemperatur von 94°C mit einem Temperaturmaximum oberhalb des Siedepunkts von Wasser 15 g Kaliumhydroxid-Pulver und 10 g Eisen(III)chlorid in 20 bis 30 ml Wasser ausreichend ist, um bei Ingangsetzung einer Spontanreaktion durch Auftrennen der Membran 15 und Mischen dieser beiden Reaktanden innerhalb von fünf Minuten die angegebenen 200 ml Wasser zu sieden.

Dies erfolgt mit der oben erwähnten Durchlauferhitzereinrichtung 7, die das aus dem Vorratsbehälter 11 in den Wärmetauscher 9 eintretende Brühwasser 12 bei einer Aktivierung der Wärmequelle 8 zum Sieden bringt. Dadurch steigt der entstehende Dampf in dem Steigleitungsabschnitt 18 der Leitung 10 hoch zum Filterbett 3, wo das Kaffeepulver 4 durch das mittlerweile wieder auskondensierte, aus dem Speiseabschnitt 19 der Leitung 10 austretende heiße Brühwasser 12 beaufschlagt wird und heißer Filterkaffee in den Zubereitungsraum 2 läuft. Letzterer wird durch den Verbrauch des Vorrats an Wasser im Vorratsbeutel 11 sukzessive freigegeben. Bei Erschöpfung des Vorrats an Brühwasser 12 ist der kollabierbare Vorratsbeutel 11 - wie dies aus Fig. 2 ersichtlich ist - bis auf den Boden des Zubereitungsraums 2 zusammengesunken. Letzterer ist mit dem heißen, frisch gebrühten Kaffee 24 gefüllt, der aus der Trinktülle 5 des Basisbehälters 1 getrunken werden kann.

Um einen Rückfluss von kondensiertem Wasser aus dem Steigleitungsabschnitt 18 in den Wärmetauscher 9 hinein zu unterbinden, ist im Übrigen am unteren Ende des Steigleitungsabschnitts 18 ein Rückschlagventil 21 vorgesehen. Dieses kann alternativ oder zusätzlich auch in dem kurzen Verbindungsabschnitt 22 zwischen dem Auslass des Vorratsbehälters 11 im Boden 6 des Basisbehälters 1 und dem Wärmetauscher 9 angeordnet sein.

Zur Handhabung des heißen Behälters 1 und zur Optimierung der thermischen Verhältnisse können noch verschiedene Maßnahmen vorgenommen werden. So kann beispielsweise die Außenwand des Basisbehälters 1 eine temperaturabhängige Farbgebung aufweisen, die bei Aktivierung der Zubereitungsvorrichtung und entsprechend heißem Inhalt im Basisbehälter 1 eine auffällige Warnfarbe annehmen kann. Der Boden 6 kann aus einem besonders wärmeleitfähigen Material hergestellt sein, um durch die Restwärme der Wärmequelle 8 für eine Warmhaltung des im Zubereitungsraum 2 gebildeten Heißgetränks 24 zu sorgen.

Wie in den Zeichnungen nicht näher dargestellt ist, kann für die Zubereitung einer Suppenportion ein entsprechendes Instant-Suppenpulver direkt im Zubereitungsraum 2 um den Vorratsbehälter 11 herum bevorratet werden. Das Filterbett 3 ist dann verzichtbar, das Wasser für die Zubereitung der Suppenportion kann direkt von dem Speiseabschnitt 19 der Leitung 10 auf das Suppenpulver tropfen, bis wiederum der Vorratsbeutel 11 kollabiert und das gesamte Wasser daraus in den Zubereitungsraum 2 mit Hilfe der Durchlauferhitzereinrichtung 7 unter Erwärmung transportiert wurde.

Wie ebenfalls aus den Zeichnungen nicht eigens ersichtlich wird, kann statt der Trinktülle 5 auch der obere Abschnitt 20 des Basisbehälters 1 als Deckel vom Rest abtrennbar ausgelegt sein, um etwa ein Löffeln der im Zubereitungsraum 2 verfügbaren Suppenportion zu ermöglichen.

Schließlich kann der Basisbehälter 1 in seine Wand 25 integrierte Reservoirs 26, 27 für beispielsweise Zucker oder Süßstoff und Milchpulver aufweisen. Diese Reservoirs 26, 27 sind jeweils zwischen einem innen liegenden Wandabschnitt 28 und einem außen liegenden Wandabschnitt 29 angelegt. Letzterer ist durch Fingerdruck deformierbar und weist auf seiner Innenseite einen Dorn 30 auf, mit dessen Hilfe bei einer Druckbetätigung von außen auf den äußeren Wandabschnitt 29 der innere Wandabschnitt durchstoßen und damit das jeweilige Reservoir 26, 27 geöffnet wird. Entsprechend kann der beispielsweise im Zubereitungsraum 2 vorhandene Kaffee 24 als gesüßter Milchkaffee getrunken werden.

## Patentansprüche

1. Autarke Heißzubereitungsvorrichtung für Fertig-Lebensmittel, insbesondere Instant-Heißgetränkezubereiter, **gekennzeichnet durch**
- ein Reservoir (4) des zuzubereitenden Lebensmittels,
- einen mit einer Zubereitungsflüssigkeit (12), insbesondere Wasser gefüllten Vorratsbehälter (11),
- einen Zubereitungsraum (2) für das zuzubereitende Lebensmittel, und
- eine Durchlauferhitzereinrichtung (7), die aufweist
= eine auf einer exothermen Reaktion beruhende, bei Bedarf aktivierbare Wärmequelle (8), und
= eine von der Wärmequelle (8) heizbare Wärmetauschereinheit (9), mit deren Hilfe die Zubereitungsflüssigkeit (12) unter Verdampfen aus dem Vorratsbehälter (11) über eine Leitung (10) zu dem Zubereitungsraum (2) unter Beaufschlagung des Lebensmittel-Reservoirs (4) transportierbar ist.

2. Zubereitungsvorrichtung nach Anspruch 1, **dadurch gekennzeichnet, dass** zur Zubereitung von Brühkaffee das Lebensmittel-Reservoir durch ein Filterbett (3) mit Kaffeepulver (4) gebildet ist.

3. Zubereitungsvorrichtung nach Anspruch 1, **dadurch gekennzeichnet, dass** zur Zubereitung eines zumindest teillöslichen oder direkt zu brühenden Lebensmittels, wie Instantsuppe oder Tee, das Lebensmittel-Reservoir direkt im Zubereitungsraum (2) angeordnet ist.

4. Zubereitungsvorrichtung nach einem der vorgenannten Ansprüche, **dadurch gekennzeichnet, dass** der Vorratsbehälter für die Zubereitungsflüssigkeit (12) durch einen flexiblen, durch Entleerung kollabierbaren Beutel (11) gebildet ist, der in seinem gefüllten Ausgangszustand im Zubereitungsraum (2) angeordnet ist.

5. Zubereitungsvorrichtung nach einem der vorgenannten Ansprüche, **dadurch gekennzeichnet, dass** die Wärmequelle (8) der Durchlauferhitzereinrichtung (7) zwei exotherm reagierende Reaktanden aufweist, die in benachbarten, durch eine mittels einer Auslöseeinrichtung (16) auftrennbare Membran (15) getrennten Kammern (13, 14) untergebracht und für eine exotherme Spontanreaktion durch Auftrennen der Membran (15) in Verbindung bringbar sind.

6. Zubereitungsvorrichtung nach Anspruch 5, **dadurch gekennzeichnet, dass** die Reaktanden durch Kaliumhydroxid-Pulver und Eisen(III)chloridlösung gebildet sind.

7. Zubereitungsvorrichtung nach Anspruch 5 oder 6, **dadurch gekennzeichnet, dass** die Wärmetauschereinheit (9) der Durchlauferhitzereinrichtung (7) durch ein durch die Kammern (13, 14) verlaufendes Wendelröhrchen (23) in der Leitung (10) gebildet ist.

8. Zubereitungsvorrichtung nach einem der Ansprüche 5 bis 7, **gekennzeichnet durch** einen extern betätigbaren Stössel (16) zur Auftrennung der Membran (15).

9. Zubereitungsvorrichtung nach einem der vorgenannten Ansprüche, **dadurch gekennzeichnet, dass** die Wärmequelle (8) und die Wärmetauschereinheit (9) der Durchlauferhitzereinrichtung (7) unterhalb eines Bodens (6) des Zubereitungsraums (2) und des Vorratsbehälters (11) angeordnet sind und die verdampfte Zubereitungsflüssigkeit (12) über eine Steigleitung (18) von oben dem Lebensmittel-Reservoir (4) und Zubereitungsraum (2) zuführbar ist.

10. Zubereitungsvorrichtung nach Anspruch 7, **dadurch gekennzeichnet, dass** in der Leitung (10) für die Zubereitungsflüssigkeit (12) mindestens ein Rückschlagventil (21) angeordnet ist.

11. Zubereitungsvorrichtung nach einem der vorgenannten Ansprüche, **dadurch gekennzeichnet, dass** der Zubereitungsraum (2) mit einer Trinköffnung (5) oder einem Deckel versehen ist.

12. Zubereitungsvorrichtung nach einem der vorgenannten Ansprüche, **dadurch gekennzeichnet, dass** in die Wand (25) des Basisbehälters (1) durch Betätigung von außen in den Zubereitungsraum (2) entleerbare Reservoirs (26, 27) für Zusatzgeschmacksmittel integriert sind.
